# EUROPEAN PATENT APPLICATION

(11) **EP 1 221 600 A1**
(43) Date of publication of application: **10.07.2002**
(21) Application number: 01205183.5
(22) Date of filing: 28.12.2001
(51) Int. Cl.: G01K 1/08, A01K 1/00

(54) **Temperature sensor protector**

(30) Priority: 08.01.2001 BE 200100018
(71) Applicant: Bennenbroek, Jos, 2960 Brecht-Overbroek (BE)
(72) Inventor: Bennenbroek, Jos, 2960 Brecht-Overbroek (BE)

(57) **Abstract**

The invention of the temperature sensor protector consists in the fact that the climate sensor of the climatc control computer is protected from the pigs which move constantly around the sensor.

In this way the climate sensor is protected from beinq bitten to pieces, and as a result can be located at the same level as the animals.

Measuring the temperature at the same level as the animals has the advantage that the climate control will adopt the ideal position, so that the pigs do not suffer from draughts.

This results in a better health of the animals.

Measuring the temperature at the same level where the animals are, results in saving energy as well, since the fans will not operate at a higher speed than is necessary.

## Description

The invention consists in a protective frame for temperature sensors that are linked to climate control computers in pig barns.

The protector is entirely made of iron wire, and has the form of an oblong cube.

The length of the protector may vary from 1 m to 1.5 m.

The opening at the bottom is also closed with iron wire.

The opening on top is left open so that the temperature sensor can be suspended in the protector.

The protector itself can be suspended in the barns in two ways, namely
1) The protector is suspended by the eyelets which are attached at the top of the protector.
   See drawing on page 3a
2) The protector is attached by moans of metal strips to a wall or a pen partition.
   See drawing on page 3b.

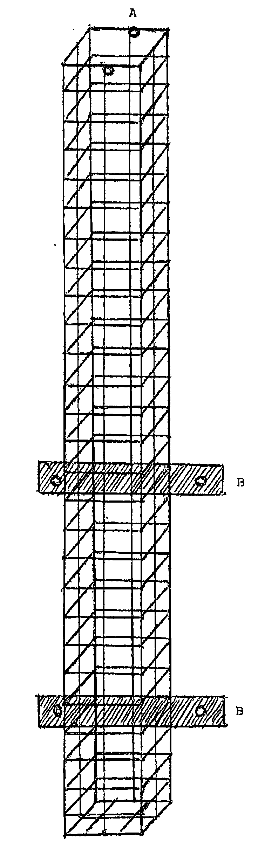

## Claims

1. Up till now temperature sensors in pig barns are suspended beyond the reach of the pigs, as they would otherwise damage or even destroy the sensors.
Unfortunately, the best method to measure climate/temperature should be done at the place where the animals are located, i.e. at the same level.
By means of my invention it is possible to hang the temperature sensor among the animals, because of the optimal protection of the sensor. In other words, the pigs or piglets are unable to catch the sensor itself, and are therefore unable to damage or to destroy it.
With my invention it is possible to measure the temperature in a pigs barn optimally. The temperature is transmitted to the computer which controls the climate in the barn, which is of the utmost importance for the good health of the animals. Thanks to this temperature sensor protector a lower energy consumption is realized as well.
Cold air goes down, warm air goes up. As a result the sensor will come into contact with the cold air first, so that the fans will more quickly operate at a lower number of revolutions.
This results in saving energy.
